# EUROPÄISCHE PATENTSCHRIFT

(11) **EP 2 008 849 B1**
(45) Veröffentlichungstag und Bekanntmachung des Hinweises auf die Patenterteilung: **14.08.2013**
(21) Anmeldenummer: 08010350.0
(22) Anmeldetag: 06.06.2008
(51) Int. Cl.: B60J 7/16, B60R 9/055

(54) **Kraftfahrzeugdach**
Motor vehicle roof
Toit de véhicule automobile

(30) Priorität: 26.06.2007 DE 102007029580
(43) Veröffentlichungstag der Anmeldung: 31.12.2008
(73) Patentinhaber: GM Global Technology Operations LLC, Detroit, MI 48265-3000 (US)
(72) Erfinder: Baccelli, Gian Luca, 65232 Taunusstein-Orlen (DE)
(74) Vertreter: Strauss, Peter

(56) Entgegenhaltungen:
- EP-A- 1 514 734
- EP-A- 1 535 779
- DE-A1- 10 017 712
- DE-A1- 10 359 513
- DE-A1- 19 944 775
- DE-A1-102006 014 206
- DE-C1- 4 407 286
- FR-A- 2 741 308
- JP-A- 2000 033 819
- US-A- 3 319 996
- US-A1- 2005 280 292

## Beschreibung

Die Erfindung betrifft ein Kraftfahrzeugdach, insbesondere für ein Großraumpersonenkraftfahrzeug, wie beispielsweise Van, Kombi oder Kleinbus, wobei das Kraftfahrzeugdach insbesondere ein Teil der Kraftfahrzeugkarosserie sein kann.

Aus DE 198 31 133 A1 ist ein Kraftfahrzeugdach bekannt, das ein Basisdach mit einem Dachhimmel aufweist. Innerhalb des Basisdachs ist ein Dachsegment vorgesehen, das sich über die gesamte Breite des Basisdachs erstreckt und aus dem Basisdach heraus geschwenkt werden kann. Im geschlossenen Zustand fluchtet das Dachsegment mit der Oberfläche des Basisdachs. Im geöffneten Zustand ist das Dachsegment im Wesentlichen parallel zur Ausgangslage angeordnet, um einen kleinen Spalt zwischen dem Dachsegment und dem Basisdach auszubilden, der einen Druckausgleich im Kraftfahrzeuginnenraum ermöglicht für den Fall, dass ein oder mehrere Airbags ausgelöst werden.

Nachteilig bei einem derartigen Kraftfahrzeugdach ist, dass es sich bei dem beweglichen Dachsegment um ein sicherheitskritisches Bauteil handelt, das in seiner Funktion nicht beeinträchtigt werden darf. Insbesondere bei Großraumpersonenkraftfahrzeugen, wie beispielsweise Vans, Kombis oder Kleinbusen, ist dies nachteilig, da derartige Kraftfahrzeuge häufig zum Transport von Gegenständen, beispielsweise Gepäckstücken oder sperrigen Gegenständen verwendet werden. Für die Funktionalität insbesondere für ein Großraumpersonenkraftfahrzeugen ist es daher besonders wichtig, dass Gegenstände auch auf dem Dach transportiert werden können. Die Möglichkeit Gegenstände auf dem Dach zu transportieren wird jedoch durch ein in einem Notfall ausfahrbares Dachsegment deutlich beeinträchtigt, da im Bereich des Dachsegments aus Sicherheitsgründen keine Gegenstände transportiert werden können.

Es ist die Aufgabe der Erfindung ein Kraftfahrzeugdach zu schaffen, das ohne die Sicherheit signifikant zu beeinträchtigen den Transport von Gegenständen verbessert.

Die Lösung der Aufgabe erfolgt erfindungsgemäß durch die Merkmale des Anspruchs 1. Bevorzugte Weiterbildungen der Erfindung sind in den Unteransprüchen angegeben.

Das erfindungsgemäße Kraftfahrzeugdach, das insbesondere für ein Großraumpersonenkraftfahrzeug, beispielsweise Van, Kombi, Transporter bis 7,5 t oder Kleinbus, geeignet ist, weist ein Basisdach auf, durch das insbesondere ein Dachhimmel des Kraftfahrzeugs ausgebildet sein kann. Ferner ist ein Dachsegment vorgesehen, das im Wesentlichen vertikal relativ zum Basisdach bewegbar ist. Im geschlossenen Zustand liegt das Dachsegment im Wesentlichen an dem Basisdach an. Im geöffneten Zustand ist das Dachsegment relativ zum Basisdach beabstandet angeordnet. Erfindungsgemäß ist im geöffneten Zustand ein zusätzlicher Stauraum zur Aufnahme von Gepäckstücken ausgebildet. Der zusätzliche Stauraum weist insbesondere das zwischen dem Basisdach und dem Dachsegment im Vergleich zum geschlossenen Zustand zusätzlich zugängliche Volumen auf, wobei vorzugsweise dieses Volumen durch das Dachsegment überdacht ist. Der Stauraum ist insbesondere derart dimensioniert, dass beispielsweise ein Koffer allein von dem zusätzlichen Stauraum aufgenommen werden kann. Erfindungssätzlichen Stauraum aufgenommen werden kann. Erfindungsgemäß weist das Dachsegment mindestens ein oberes relativ beweglich mit dem Dachsegment verbundenes Dachelement auf. Zusätzlich bzw. alternativ weist das Basisdach mindestens ein unteres relativ beweglich mit dem Basisdach verbundenes Dachelement auf. Durch das untere und/oder obere Dachelement kann der Stauraum geöffnet und geschlossen werden. Erfindungsgemäß sind das obere Dachelement und/oder das untere Dachelement zumindest teilweise transparent.

Durch das bewegliche Dachelement wird besonders einfach der Zugang zu dem zusätzlichen Stauraumvolumen ermöglicht, das bei Bedarf zwischen dem Dachhimmel und dem ausgefahrenen Dachsegment ausgebildet wird. Dadurch kann das Kraftfahrzeugdach insbesondere auch bei Kleinwagen, Sportwagen oder Supersportwagen verwendet werden, bei denen in der Regel kaum Stauraum vorgesehen ist. Da im geschlossenen Zustand das Kraftfahrzeugdach kaum den Luftwiderstand erhöht, wird bei für hohe Geschwindigkeiten ausgelegten Fachzeugen, wie insbesondere Sportwagen, die Höchstgeschwindigkeit kaum beeinträchtig, wobei im Bedarfsfall zusätzlicher Stauraum geschaffen werden kann, wenn es nicht auf die Höchstgeschwindigkeit sondern auf das zur Verfügung stehenden Transportvolumen ankommt. Für den Fall, dass ein oberes bewegliches Dachelement vorgesehen ist, ist es möglich Gepäckstücke oder andere sperrige Ladung von der Dachseite her zu laden. In dem Fall eines unteren beweglichen Dachelements kann der Stauraum nach dem Beladen zum Fahrgastinnenraum abgegrenzt werden. Das Design des Dachhimmels wird dadurch nicht beeinträchtigt. Zusätzlich kann das untere Dachelement als Ablageboden für in den Stauraum abgelegte Gegenstände dienen. Mit Hilfe des unteren Dachelements kann also der Fahrgastinnenraum nicht nur bei Bedarf vergrößert werden, sondern es ist auch möglich zusätzliche Ablagefläche für zu transportierende Gegenstände zu schaffen. Vorzugsweise fluchtet das untere Dachelement mit dem an der zum Kraftfahrzeuginnenraum weisenden Seite des Basisdachs angeordneten Dachhimmel. Da das Dachsegment einen so großen Abstand zum Basisdach einnehmen kann, dass Gepäckstücke in dem zusätzlichen Volumen aufgenommen werden können, ist es nicht erforderlich außerhalb des Kraftfahrzeugdachs auf der Oberfläche des Dachsegments Gepäckstücke zu befestigen, sodass der Transport von Gepäckstücken verbessert ist. Gleichzeitig kann das mindestens eine bewegliche Dachelement derart ausgestaltet sein, dass in dem Fall auslösender Airbags ein Druckausgleich über das zu öffnende Dachelement möglich ist, wodurch die Sicherheit nicht beeinträchtigt wird. Eine Bewegung des gesamten Dachsegments, um ein Druckausgleich zu ermöglichen, ist nicht erforderlich. Insbesondere bei länglichen und/oder sperrigen Gegenständen ist es möglich diese Gegenstände zwischen dem Dachsegment und dem Basisdach festzuklemmen, sodass eine zusätzliche Sicherung der Ladung erreicht wird.

Bei der transparenten Ausgestaltung des oberen und/oder des unteren Dachelements ist es ferner vorgesehen, dass das eine Dachelement im Wesentlichen transparent und das andere Dachelement undurchsichtig ist. Das heißt entweder ist das obere Dachelement zumindest teilweise transparent und das untere Dachelement undurchsichtig oder das untere Dachelement ist zumindest teilweise transparent und das obere Dachelement ist undurchsichtig. Durch die Transparenz des mindestens einen Dachelements wird durch das Dachelement ein Fenster ausgebildet, um die Helligkeit im Kraftfahrzeuginnenraum zu verbessern, wenn der zusätzliche Stauraum nicht benötigt wird. Insbesondere wenn das eine Dachelement transparent und das andere Dachelement undurchsichtig ist kann das jeweils undurchsichtige Dachelement zusätzlich als Sonnenschutz verwendet werden. Beispielsweise ist das obere Dachelement transparent, um Sonnenlicht in den Kraftfahrzeuginnenraum hinein zu lassen. Erforderlichenfalls kann das untere undurchsichtige Dachelement in einen geschlossenen Zustand gebracht werden, um einen Sonnenschutz auszubilden oder in einen geöffneten Zustand gebracht werden, um das Sonnenlicht in den Kraftfahrzeuginnenraum hinein zu lassen. Insbesondere wenn in diesem Fall das untere Dachelement mehrere Lamellen aufweist, lässt sich die Sonnenschutzfunktion besonders einfach realisieren.

Vorzugsweise ist das Dachelement, das heißt das untere und/oder obere Dachelement, um mindestens eine Schwenkachse schwenkbar. Die Schwenkachse kann hierbei seitlich zum Dachelement und/oder innerhalb des Dachelements verlaufen. Beispielsweise ist das obere Dachelement rechteckig ausgeführt und kann an einer entlang der Längsseite des Dachelements verlaufenden Schwenkachse aufgeklappt werden. Ferner ist es möglich das Dachelement schwenkbar innerhalb eines Rahmens anzuordnen, wobei der Rahmen um eine andere Schwenkachse verschwenkt werden kann. Dies ermöglicht es beispielsweise ein rechteckiges Dachelement sowohl an der Längsseite als auch an der Stirnseite zu verschwenken und/oder an zwei aneinander gegenüberliegenden Seiten zu verschwenken. Ferner ist es möglich mehrere Dachelemente vorzusehen, die um jeweils mindestens eine Schwenkachse schwenkbar ausgeführt sind. Beispielsweise kann ein Dachelement zweiteilig ausgeführt sein, wobei beide Teile des Dachsegments um eine gemeinsame Schwenkachse verschwenkt werden können. Dadurch ist es möglich beispielsweise zwei Klappen auszubilden, wobei die eine Klappe von der rechten Seite und die andere Klappe von der linken Seite her geöffnet werden können und zur Fahrzeugmitte hin aufklappen.

Besonders bevorzugt weist das Dachelement Lamellen auf, die untereinander und/oder übereinander und/oder ineinander zusammen geschoben werden können. Das Dachelement kann dadurch von einem länglichen flächigen Zustand in einem kompakten Zustand überführt werden. In dem länglichen flächigen Zustand können die Lamellen des Dachelements den Stauraum verschließen. Im zusammen geschobenen kompakten Zustand ist der Stauraum geöffnet, wobei das Dachelement beim Beladen des Stauraums mit Gepäckstücken nicht im Weg ist. Je nach Anwendungsfall können die Lamellen insbesondere auch eine Drehung, beispielsweise um 90°± 10° ausführen, so dass die Lamellen mit ihrer im geschlossenen Zustand aufeinander zugerichteten Stirnseiten im geöffneten Zustand nach oben bzw. unten weisen. Die Lamellen sind in diesen Fall hintereinander angeordnet, wobei die Seiten mit den größten Flächen im kompakten geöffneten Zustand ebenfalls aufeinander zu weisen.

In einer besonders bevorzugten Ausführungsform weist das Kraftfahrzeugdach einen Spoiler, der mit dem Basisdach beweglich oder unbeweglich verbunden ist, auf. In diesem Fall können die Lamellen des Dachelements im zusammen geschobenen Zustand unterhalb des Spoilers angeordnet werden, sodass die Lamellen im Wesentlichen in dem zwischen dem Spoiler und dem Basisdach spitz zulaufenden Bereich im kompakten Zustand angeordnet werden können. Die zusammen geschobenen Lamellen sind in diesem Fall in einem Volumen des Stauraums angeordnet, der zum Beladen und Entladen des Stauraums in der Regel am wenigsten benötigt wird.

Vorzugsweise weist das Kraftfahrzeugdach mindestens eine Betätigungseinrichtung auf, um das Dachsegment zu bewegen. Die Betätigungseinrichtung ist insbesondere als Hubvorrichtung ausgebildet, um eine im Wesentlichen vertikale Bewegung, insbesondere ohne Versatz oder lediglich geringfügigen Versatz in horizontaler Richtung zu ermöglirechten Dachholm der Kraftfahrzeugkarosserie verbunden. Da die Dachholme als Strukturbauteile der Kraftfahrzeugkarosserie im Vergleich zu anderen Karosseriebauteilen größere Kräfte aufnehmen können, kann sich die Betätigungseinrichtung ohne Probleme an den Dachholmen abstützen, um das Dachsegment zu betätigen. Entsprechend kann die mindestens eine Betätigungsvorrichtung auch mit einem vorderen und/oder hinteren Dachspriegel verbunden sein, wobei der Dachspriegel insbesondere mittelbar oder unmittelbar mit den Dachholmen verbunden ist und beispielsweise zwischen den Dachholmen verläuft.

Besonders bevorzugt weist die Betätigungseinrichtung mindestens einen Hebel auf, der über ein Gelenk am Basisdach oder am Dachsegment angelenkt ist. An der dem Gelenk gegenüberliegenden Seite des Hebels ist der Hebel verschiebbar ausgeführt. Insbesondere ist der Hebel hierzu am und/oder im Dachholm oder Dachspriegel verschiebbar geführt. Vorzugsweise ist der Dachholm bzw. Dachspriegel zumindest teilweise als Hohlprofil ausgeführt, sodass sich innerhalb des Dachholms bzw. Dachspriegels automatisch eine Führung für den Hebel ergibt, der beispielsweise mit Hilfe einer angetriebenen Gewindestange in horizontaler Richtung verschoben werden kann, um das Dachsegment zu öffnen oder zu schließen.

Besonders bevorzugt sind mindestens zwei Betätigungseinrichtungen vorgesehen. Beispielsweise ist die eine Betätigungseinrichtung mit dem linken Dachholm verbunden und die andere Betätigungseinrichtung mit dem rechten Dachholm. Besonders bevorzugt sind die mindestens zwei Betätigungseinrichtungen mit genau einer Antriebseinheit verbunden, wobei die Antriebseinheit elektrisch oder pneumatisch oder hydraulisch oder elektromagnetisch, beispielsweise mit einem Hub- oder Linearmotor, betätigt werden kann. Zusätzlich oder alternativ kann der Antrieb der Antriebseinheit manuell, beispielsweise mit Hilfe einer Handkurbel, erfolgen. Um die Verbindungsmittel zwischen der Antriebseinheit und der Betätigungseinrichtung möglichst kurz und kostengünstig ausbilden zu können, ist die Antriebseinheit vorzugsweise mit einem in Querrichtung verlaufenden Dachpriegel Verbunden der zwischen dem linken Dachholm und dem rechten Dachholm verlaufen kann. Insbesondere ist die Antriebseinheit mittig angeordnet, sodass zur Verbindung der Antriebseinheit mit der einen Betätigungseinrichtung und der anderen Betätigungseinrichtung die gleichen Verbindungsmittel verwendet werden können. Es ist auch möglich die Dachholme und die Dachspriegel zu vertauschen, so dass die Betätigungsvorrichtungen mit den Dachspriegeln und die Antriebseinheit mit dem Dachholm verbunden sind.

Vorzugsweise ist mindestens eine Verriegelungseinrichtung vorgesehen, um das Dachelement und/oder das Dachsegment insbesondere in verschiedenen Positionen arretieren zu können. Hierzu kann beispielsweise ein Rastmechanismus vorgesehen sein oder eine Bremse, die das Dachelement und/oder das Dachsegment insbesondere stufenlos feststellen kann. Besonders bevorzugt kann die Verriegelungseinrichtung ferngesteuert betätigt werden. Dadurch ist es beispielsweise möglich mit einem Fernbedienungsimpuls eines Kraftfahrzeugschlüssels das Dachelement und/oder das Dachsegment zu entriegeln oder zu verriegeln. Zusätzlich bzw. alternativ kann das Dachelement und/oder das Dachsegment beispielsweise elektrisch aus dem Kraftfahrzeuginnenraum betätigt werden. Hierzu ist beispielsweise in der Fahrerkonsole ein entsprechender Schaltmechanismus vorgesehen.

In einer bevorzugten Ausführungsform ist mit dem Dachsegment ein Spoiler beweglich verbunden. Der Spoiler ist insbesondere mit dem Basisdach gelenkig und/oder in horizontaler Richtung verschiebbar verbunden. Wenn das Dachsegment aus der Ebene des Basisdachs herausbewegt wird, wird dadurch automatisch der Spoiler mitbewegt, so dass das Dachsegment im geöffneten ausgefahrenen Zustand den Luftwiderstand des Kraftfahrzeugs nicht wesentlich erhöht. Um ein sich gegebenenfalls zwischen dem Spoiler und dem Dachsegment ergebenes sich veränderndes Spaltmaß auszugleichen, kann zwischen dem Dachsegment und dem Spoiler ein Längenausgleich vorgesehen sein. Der Längenausgleich wird beispielsweise über ein flexibles, insbesondere gummielastisches Material erreicht, das gleichzeitig Regenwasser abweisen kann. Um eine kinematische Verbindung zwischen dem Spoiler und dem Dachsegment zu gewährleisten, können das Dachsegment und der Spoiler über einen in Längsrichtung verschiebbaren Schiebehebel verbunden sein.

Vorzugsweise erstreckt sich das Dachsegment von dem linken Dachholm bis zum rechten Dachholm, wodurch über die gesamte Breite des Kraftfahrzeugsdachs der Stauraum erforderlichenfalls vergrößert werden kann.

Um den Stauraum vor Umwelteinflüssen zu schützen, kann mit dem Dachsegment und mit dem Basisdach eine flexible Schutzhülle verbunden sein. Die Schutzhülle kann beispielsweise derart ausgestaltet sein, dass sie im eingefahrenen Zustand des Dachsegments zusammengefaltet ist und im ausgefahrenen Zustand Seitenwände des Stauraums ausbildet. Ferner kann die Schützhülle Öffnungsmittel aufweisen, um die Schutzhülle in einem Teilbereich öffnen zu können. Beispielsweise weist die Schutzhülle einen Reißverschluss auf, um den entgegen der Fahrtrichtung weisenden Teil der Schutzhülle öffnen zu können, so dass besonders lange Gegenstände, wie beispielsweise Surfbretter ohne zusätzliche Probleme transportiert werden können.

Besonders bevorzugt weist das Dachsegment im maximal geöffneten Zustand zum Basisdach einen vertikalen Abstand von ≥ 10,0 cm, insbesondere ≥ 30,0 cm, vorzugsweise ≥ 50,0 cm, besonders bevorzugt ≥ 80,0 cm auf. Durch diese Dimensionierung des Abstands des Dachsegments zum Basisdach, wobei der Abstand jeweils von der Oberfläche des Dachsegments zur Oberfläche des Basisdachs gemessen wird, wird einem Volumen für den Stauraum erreicht, das groß genug ist, um Gegenstände, insbesondere Gepäckstücke oder sperrige Gegenstände, lagen zu können.

Damit auch neben dem beweglichen Dachsegment Gegenstände mit dem Kraftfahrzeugdach verbunden werden können, ohne dass das sich bewegende Dachsegment an den bereits befestigten Gegenständen anstoßen kann, ist es bevorzugt einen Versatz des Dachsegments in horizontaler Richtung möglichst gering zu halten. Hierzu kann das Dachsegment im maximal geöffneten Zustand im Vergleich zum geschlossenen Zustand ein Versatz in horizontaler Richtung von ≤ 10,0 cm, insbesondere ≤ 5,0 cm, vorzugsweise ≤ 2,0 cm, besonders bevorzugt ≤ 1,0 cm und weiter bevorzugt ≤ 0,5 cm aufweisen. Durch diese Dimensionierung des Versatzes wird die Funktionalität des Kraftfahrzeugdachs zum Transport weiterer Gegenstände auf dem Kraftfahrzeugdach nicht wesentlich eingeschränkt, wobei gleichzeitig mehrere alternative Betätigungseinrichtungen zur Bewegung des Dachsegments je nach beabsichtigtem Anwendungsfall ausgewählt werden können.

Die Erfindung betrifft ferner eine Kraftfahrzeugkarosserie, die insbesondere für Vans, Kombis oder Kleinbusse vorgesehen ist und ein Kraftfahrzeugdach aufweist, das wie vorstehend beschrieben aus- und weitergebildet sein kann. Vorzugsweise sind ein linker Dachholm und ein rechter Dachholm vorgesehen, so dass das Kraftfahrzeugdach als einzelnes Modul sicher mit der Kraftfahrzeugkarosserie verbunden werden kann. Das Kraftfahrzeugdach kann insbesondere mit den Dachholmen abschließen, so dass die Dachholme das Basisdach begrenzen. Insbesondere sind eine rechte Reling und eine linke Reling vorgesehen, mit deren Hilfe auf dem Kraftfahrzeugdach Gepäckstücke und sperrige Gegenstände befestigt werden können. Vorzugsweise weist das Dachsegment im maximal geöffneten Zustand zu der Oberfläche des Basisdachs einen Abstand auf, der größer ist als das 1,5 -fache, insbesondere 2,0 -fache, vorzugsweise 3,5 -fache und besonders bevorzugt das 5,0 -fache des Abstands der Oberfläche der Dachreling zur Oberfläche des Basisdachs. Durch diese Dimensionierung des Abstands des Dachsegments zum Basisdach kann durch das Dachsegment ein zusätzliches Befestigungsmittel ausgebildet werden, mit deren Hilfe ein zu transportierender Gegenstand auf dem Kraftfahrzeugdach sicher befestigt, insbesondere verschnürt werden kann. Beispielsweise kann der mit den Dachrelings verbundene Transportgegenstand durch das ausgefahrene Dachsegment vor Fahrtwind geschützt werden. Besonders bevorzugt befindet sich die Oberfläche des Dachsegments auf der im Wesentlichen gleichen Höhe wie die Oberfläche der Dachreling, so dass der Luftwiderstand quer zur Fahrtrichtung im Wesentlichen nicht erhöht ist und gleichzeitig eine Vertiefung im Dachhimmel und/oder im Basisdach zur Aufnahme des Dachsegments nicht erforderlich ist.

Besonders bevorzugt weist die Kraftfahrzeugkarosserie mindestens zwei Betätigungseinrichtungen auf, die mit genau einer elektrischen oder pneumatischen oder hydraulischen Antriebseinheit zum Betrieb der Betätigungseinrichtung verbunden sind, wobei die Antriebseinheit insbesondere mit einem Dachspriegel oder mit dem Dachholm verbunden ist. Dies ermöglicht es die Antriebseinheit an Strukturbauteilen der Kraftfahrzeugkarosserie sicher zu befestigen. Die Antriebseinheit kann sogar besonders groß ausgestaltet sein und ist insbesondere zum gleichzeitigen Antrieb von mehr als einer Betätigungseinrichtung dimensioniert.

Nachfolgend wird die Erfindung unter Bezugnahme auf die anliegenden Zeichnungen anhand bevorzugter Ausführungsbeispiele näher erläutert.

Das Basisdach ist seitlich durch einen linken Dachholm und einen rechten Dachholm begrenzt. Mit dem linken Dachholm kann eine linke Dachreling befestigt werden. Entsprechend kann mit dem rechten Dachholm eine rechte Dachreling befestigt werden.

Es zeigen:
- Fig. 1:: eine schematische perspektivische Ansicht eines Kraftfahrzeugs mit dem erfindungsgemäßen Kraftfahrzeugdach in einer ersten Ausführungsform,
- Fig. 2:: eine schematische perspektivische Ansicht eines Kraftfahrzeugs mit einem erfindungsgemäßen Kraftfahrzeugdach in einer zweiten Ausführungsform,
- Fig. 3:: eine schematisch perspektivische Ansicht eines Kraftfahrzeugdachs mit einer ersten Betätigungseinrichtung
- Fig. 4:: eine schematische perspektivische Ansicht eines erfindungsgemäßen Kraftfahrzeugdach mit einer zweiten Betätigungseinrichtung.

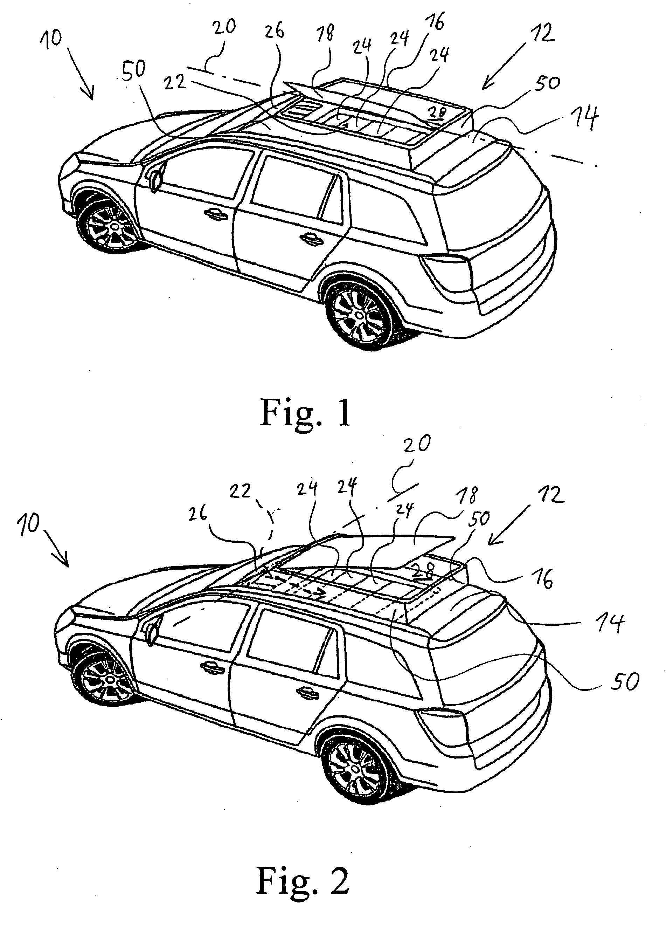

Ein im Fig. 1 dargestelltes Kraftfahrzeug 10 weist ein Kraftfahrzeugdach 12 auf, dass ein Basisdach 14 und ein im Wesentlichen in vertikaler Richtung bewegbares Dachsegment 16 aufweist. Im dargestellten Ausführungsbeispiel weist das Dachsegment 16 ein oberes Dachelement 18 auf, das an einer Längsseite um eine mittig zum Kraftfahrzeug 10 angeordnete Schwenkachse 20 aufklappbar angeordnet ist. Alternativ kann das obere Dachelement 18 auch mehrere Teile aufweisen die beispielsweise lamellenartig übereinander, untereinander oder ineinander zusammen geschoben werden können.

Im dargestellten Ausführungsbeispiel weist das Basisdach 14 ein unteres Dachelement 22 auf, das mehrere Lamellen 24 aufweist die in Fahrtrichtung und/oder entgegen der Fahrtrichtung übereinander, untereinander oder ineinander zusammen geschoben werden können. Um den Luftwiderstand im ausgefahrenen Zustand des Dachsegments 16 zu reduzieren, ist das Dachsegment 16 mit einem Spoiler 26 verbunden, der bei der Bewegung des Dachsegments 16 automatisch mitbewegt werden kann. Das obere Dachelement 16 und/oder das untere Dachelement 22 sowie der Spoiler 26 können zumindest teilweise transparent ausgestaltet sein, um eine Beleuchtung des Kraftfahrzeuginnenraums durch Sonnenlicht zu ermöglichen. Im dargestellten Ausführungsbeispiel ist das obere Dachelement 16 vergleichbar zu einem Fenster transparent ausgestaltet, während die Lamellen 24 des unteren Dachelements undurchsichtig ausgestaltet sind, um erforderlichenfalls als Sonnenschutz zu dienen.

Das untere Dachelement 22 ist insbesondere derart angeordnet, dass es mit dem an der Unterseite des Basisdachs 14 angeordneten Dachhimmel des Kraftfahrzeugs 10 fluchtet. Alternativ zu der in Fig. 1 dargestellten Ausführungsform kann das untere Dachelement 22 vergleichbar zu einem Fensterrollo ausgestaltet sein. Ferner kann das untere Dachelement 22 auch als Hartschale und/oder Gitternetz ausgeführt sein.

Bei dem in Fig. 2 dargestellten Kraftfahrzeug 10 ist die Schwenkachse 20 des oberen Dachelements 18 quer zur Fahrtrichtung angeordnet. Ferner ist das im Wesentlichen rechteckförmige obere Dachelement 18 an einer Stirnseite benachbart zu dem Spoiler 26 mit dem Dachsegment 16 drehbeweglich verbunden. Vorzugsweise ist das obere Dachelement 18 im geöffneten Zustand, in den das obere Dachelement 18 beispielsweise mit Hilfe von Hubzylindern bewegt werden kann, derart angeordnet, dass die Oberfläche des oberen Dachelements 18 im Wesentlichen mit der Oberfläche des Spoilers 26 fluchtet. Dies führt dazu, dass im eingefahrenen, das heißt geschlossenen Zustand des Dachsegments 16 das obere Dachelement vergleichbar zu einem Hubschiebedach wirkt. Im ausgefahrenen Zustand, das heißt geöffneten Zustand des Dachsegments 16 hat sich der Öffnungswinkel des Spoilers 26 stark vergrößert, sodass das obere Dachelement 18 in einer besonders stark geöffneten Position angeordnet ist, die ein besonders einfaches Beladen eines zwischen dem Dachsegment 18 und dem Basisdach 14 ausgebildeten Stauraum 28 erreicht hat.

Der Abstand des Dachsegments 16 zum Basisdach 14 ist im geöffneten, das heißt ausgefahrenen Zustand derart dimensioniert, dass der Stauraum 28 ein Volumen ausbildet, das groß genug ist Gepäckstücke und/oder sperrige Gegenstände aufzunehmen. Der Stauraum 28 weist insbesondere ein Volumen von mindestens 100 Litern, vorzugsweise 200 Litern und besonders bevorzugt 300 Litern auf. Insbesondere ist es in den dargestellten Ausführungsbeispielen möglich sowohl das Transportvolumen des Kraftfahrzeuginnenraums als auch das Transportvolumen des Stauraums 28 für den Transport eines Gegenstands zu verwenden, da der Gegenstand von dem Kraftfahrzeuginnenraum in den Stauraum 28 hineinragen kann, wenn das untere Dachelement 22 geöffnet ist.

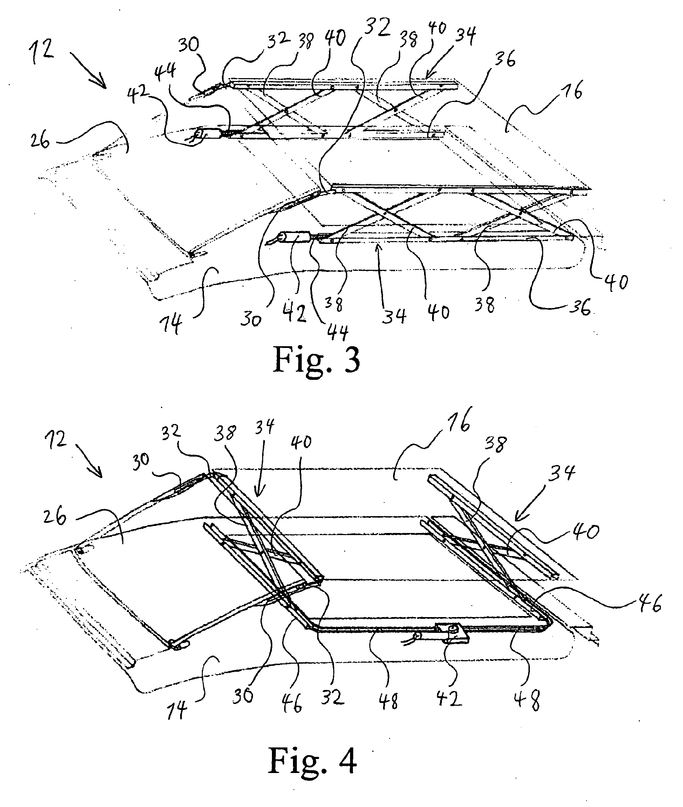

Der Spoiler 26 kann mit dem Dachsegment 16 über einem in einer Führung 30 geführten Schieberhebel 32 verbunden sein (Fig. 3). Das Dachsegment 16 wird im dargestellten Ausführungsbeispiel mit Hilfe von zwei Betätigungseinrichtungen 34 im Wesentlichen ohne Versatz in vertikaler Richtung bewegt. Die Betätigungseinrichtungen 34 sind jeweils mit einem in Längsrichtung des Kraftfahrzeugs 10 verlaufenen Dachholmen 36 verbunden, um sich an den Dachholmen 36 bei der Bewegung des Dachsegments 16 abstützen zu können. Die Betätigungseinrichtung 34 weist jeweils mindestens ein Hebelpaar auf, das einen ersten Hebel 38 und einen zweiten Hebel 40 aufweist, die über Kreuz gelenkig miteinander verbunden sind. Die Hebel 38, 40 sind ferner gelenkig mit dem Dachsegment 16 verbunden. Ferner ist ein elektrisch angetriebene Betätigungseinrichtung 42 vorgesehen, welche die unteren Enden der Hebel 38, 40 über eine Spindel 44 aufeinander zubewegt, um das Dachsegment 16 nach oben zu bewegen und umgekehrt.

Die Betätigungseinrichtungen 34 können jedoch auch quer zur Fahrtrichtung angeordnet sein (Fig. 4) und sich an zwischen den Dachholmen 38 verlaufenden Querspriegeln 46 abstützen, in denen die Hebel 38, 40 geführt sind. Ferner ist es möglich für beide Betätigungseinrichtungen 34 genau eine Antriebseinheit 42 vorzusehen. Bei dem in Fig. 4 dargestellten Ausführungsbeispiel weist die Antriebseinheit 42 Leitungen 48 auf, um die Betätigungseinrichtungen 34 pneumatisch oder hydraulisch anzusteuern, indem die Hebel 38, 40 im unteren Bereich aufeinander zu oder voneinander weg gedrückt werden.

Zwischen dem Dachsegment 16 und dem Basisdach 14 kann ferner eine flexible Schutzhülle 50 vorgesehen sein, um den Stauraum 28 vor Umwelteinflüssen zu schützen (Fig. 1, Fig. 2). Die Schutzhülle 50 ist insbesondere derart ausgestaltet, dass sie im eingefahrenen Zustand des Dachsegments 16 sich automatisch zusammenfaltet.

### Bezugszeichenliste

- 10: Kaftfahrzeug
- 12: Kraftfahrzeugdach
- 14: Basisdach
- 16: Dachsegment
- 18: oberes Dachelement
- 20: Schwenkachse
- 22: unteres Dachelement
- 24: Lamelle
- 26: Spoiler
- 28: Stauraum
- 30: Führung
- 32: Schieberhebel
- 34: Betätigungseinrichtung
- 36: Dachholm
- 38: erster Hebel
- 40: zweiter Hebel
- 42: Antriebseinheit
- 44: Spindel
- 46: Dachspriegel
- 48: Leitung
- 50: Schutzhülle

## Patentansprüche

1. Kraftfahrzeugdach umfassend
ein Basisdach (14) und
ein im Wesentlichen vertikal relativ zum Basisdach (14) bewegbares Dachsegment (16), das im geschlossenen Zustand an dem Basisdachs (14) im Wesentlichen anliegt und im geöffneten Zustand zu dem Basisdach (14) beabstandet angeordnet ist, wobei
ein zusätzlicher Stauraum (28) zur Aufnahme von Gepäckstücken im geöffneten Zustand ausbildet ist und
das Dachsegment (16) mindestens ein oberes relativ beweglich mit dem Dachsegment (16) verbundenes Dachelement (18) und/oder das Basisdach (14) mindestens ein unteres relativ beweglich mit dem Basisdach (14) verbundenes Dachelement (22) aufweisen, um den Stauraum (28) zu öffnen und zu schließen,
**dadurch gekennzeichnet, dass**
das obere Dachelement (18) oder das untere Dachelement (22) zumindest teilweise transparent ist, wobei entweder das obere Dachelement (18) zumindest teilweise transparent und das untere Dachelement (22) undurchsichtig ist oder das untere Dachelement (22) zumindest teilweise transparent und das obere Dachelement (18) undurchsichtig ist.

2. Kraftfahrzeugdach nach Anspruch 1 **dadurch gekennzeichnet, dass** das Dachelement (18, 22) um mindestens eine Schwenkachse (20) schwenkbar ist, wobei insbesondere die Schwenkachse (20) seitlich und/oder innerhalb des Dachelements (18, 22) angeordnet ist.

3. Kraftfahrzeugdach nach Anspruch 1 oder 2 **dadurch gekennzeichnet, dass** das Dachelement (18, 22) Lamellen (24) aufweist, die untereinander und/oder übereinander und/oder ineinander zusammenschiebbar sind.

4. Kraftfahrzeugdach nach Anspruch 3 **dadurch gekennzeichnet, dass** mit dem Basisdach (14) ein Spoiler (26) verbunden ist und die Lamellen (24) im zusammengeschobenen Zustand unterhalb des Spoilers (26) angeordnet sind.

5. Kraftfahrzeugdach nach einem der Ansprüche 1 bis 4 **dadurch gekennzeichnet, dass** mindestens eine Betätigungseinrichtung (34) zum Bewegen des Dachsegments (16) vorgesehen ist, wobei die Betätigungseinrichtung (34) insbesondere mit einem linken Dachholm (36) und/oder einem rechten Dachholm (36) verbindbar ist oder mit mindestens einen Dachspriegel (46) verbindbar ist, wobei insbesondere der Dachspriegel (46) mit den Dachholmen (36) zumindest mittelbar verbunden ist.

6. Kraftfahrzeugdach nach einem der Ansprüche 1 bis 5 **dadurch gekennzeichnet, dass** mit dem Dachsegment (16) ein Spoiler (26) beweglich verbunden ist.

7. Kraftfahrzeugdach nach einem der Ansprüche 1 bis 6 **dadurch gekennzeichnet, dass** mit dem Dachsegment (16) und dem Basisdach (14) eine flexible Schutzhülle (50) zum Schutz des Stauraums vor Umwelteinflüssen verbunden ist.

8. Kraftfahrzeugdach nach einem der Ansprüche 1 bis 7 **dadurch gekennzeichnet, dass** das Dachsegment (16) im maximal geöffneten Zustand zum Basisdach (14) einen vertikalen Abstand von ≥ 10,0 cm, insbesondere ≥ 30,0 cm, vorzugsweise ≥ 50,0 cm und besonders bevorzugt ≥ 80,0 cm aufweist.

9. Kraftfahrzeugdach nach einem der Ansprüche 1 bis 8 **dadurch gekennzeichnet, dass** das Dachsegment (16) im maximal geöffneten Zustand im Vergleich zum geschlossenen Zustand einen Versatz in horizontaler Richtung von ≤ 10,0 cm, insbesondere ≤ 5,0 cm, vorzugsweise ≤ 2,0 cm, besonders bevorzugt ≤ 1,0 cm und weiter bevorzugt ≤ 0,5 cm aufweist.

10. Kraftfahrzeugkarosserie, insbesondere für Vans, Kombis (10) oder Kleinbusse, mit einem Kraftfahrzeugdach (12) nach einem der Ansprüche 1 bis 13, wobei insbesondere eine rechte Reling und eine linke Reling vorgesehen sind und das Dachsegment (16) im maximal geöffneten Zustand zum Basisdach (14) einen Abstand aufweist, der größer ist als das 1,5-fache, insbesondere 2,0-fache, vorzugsweise 3,5-fache und besonders bevorzugt das 5,0-fache des Abstands der Oberfläche der Dachreling zur Oberfläche des Basisdachs (14).

11. Kraftfahrzeugkarosserie nach Anspruch 10 **dadurch gekennzeichnet, dass** ein linker Dachholm (36) und ein rechter Dachholm (36) vorgesehen sind und das Basisdach (14) mit den Dachholmen (36) verbunden ist und insbesondere seitlich mit den Dachholmen abschließt.

12. Kraftfahrzeugkarosserie nach Anspruch 10 oder 11 **dadurch gekennzeichnet, dass** sich das Dachsegment (16) von dem linken Dachholm (36) zum rechten Dachholm (36) erstreckt.

13. Kraftfahrzeugkarosserie nach einem der Ansprüche 10 bis 12 **dadurch gekennzeichnet, dass** mindestens zwei Betätigungseinrichtungen (34) vorgesehen sind, mit genau einer elektrischen oder pneumatischen oder hydraulischen Antriebseinheit (42) zum Betrieb der Betätigungseinrichtung (34) verbunden sind, wobei die Antriebseinheit (42) insbesondere mit einem Dachspriegel (46) oder mit dem Dachholm (36) verbunden ist.

## Claims

1. A motor vehicle roof, comprising a base roof (14) and a roof segment (16) which is movable in a substantially vertical way relative to the base roof (14) and which substantially rests on the base roof (14) in the closed state and is arranged at a distance from the base roof (14) in the open state, with an additional stowage space (28) for accommodating items of baggage being formed in the open state, and the roof segment (16) comprises at least one upper roof element (18) which is connected in a relatively movable way with the roof segment (16), and/or the base roof (14) comprises at least one bottom roof element (22) which is connected in a relatively movable way with the base roof (14) in order to open and close the stowage space (28), **characterized in that** the upper roof element (18) or the bottom roof element (22) is at least partly transparent, with the either the upper roof element (18) being at least partly transparent and the bottom roof element (22) being non-transparent, or with the bottom roof element (22) being at least partly transparent and the upper roof element (18) being non-transparent.

2. A motor vehicle roof according to claim 1, **characterized in that** the roof element (18, 22) is pivotable about at least one swivel axis (20), with especially the swivel axis (20) being arranged laterally and/or within the roof element (18, 22).

3. A motor vehicle roof according to claim 1 or 2, **characterized in that** the roof element (18, 22) comprises slats (24) which can be slid together under each other and/or over one another and/or into each other.

4. A motor vehicle roof according to claim 3, **characterized in that** a spoiler (26) is connected with the base roof (14) and the slats (24) are arranged beneath the spoiler (26) in the state when pushed together.

5. A motor vehicle roof according to one of the claims 1 to 4, **characterized in that** at least one actuating device (34) is provided for moving the roof segment (16), with the actuating device (34) being connectable especially with a left roof pillar (36) and/or a right roof pillar (36) or at least one roof bow (46), with especially the roof bow (46) being at least indirectly connected with the roof pillars (36).

6. A motor vehicle roof according to one of the claims 1 to 5, **characterized in that** a spoiler (26) is movably connected with the roof segment (16).

7. A motor vehicle roof according to one of the claims 1 to 6, **characterized in that** a flexible protective cover (50) for the protection of the stowage space from environmental influences is connected with the roof segment (16) and the base roof (14).

8. A motor vehicle roof according to one of the claims 1 to 7, **characterized in that** the roof segment (16) has a vertical distance in the maximum open state from the base roof (14) of ≥ 10.0 cm, especially ≥ 30.0 cm, preferably ≥ 50.0 cm, and more preferably ≥ 80.0 cm.

9. A motor vehicle roof according to one of the claims 1 to 8, **characterized in that** the roof segment (16), in the maximally open state in comparison with the closed state, has an offset in the horizontal direction of ≤ 10.0 cm, especially ≤ 5.0 cm, preferably ≤ 2.0 cm, and more preferably ≤ 1.0 cm and even more preferably ≤ 0.5 cm.

10. A motor vehicle body, especially for vans, station wagons (10) or minibuses, comprising a motor vehicle roof (12) according to one of the claims 1 to 13, wherein especially a right rail and a left rail are provided, and the roof segment (16) has a distance in the maximally open state from the base roof (14) which is larger than 1.5 times, especially 2.0 times, preferably 3.5 times, and more preferably 5.0 times the distance of the surface of the roof rails from the surface of the base roof (14).

11. A motor vehicle body according to claim 10, **characterized in that** a left roof pillar (36) and a right roof pillar (36) are provided and the base roof (14) is connected with the roof pillars (36) and ends especially laterally with the roof pillars.

12. A motor vehicle body according to claim 10 or 11, **characterized in that** the roof segment (16) extends from the left roof pillar (36) to the right roof pillar (36).

13. A motor vehicle body according to one of the claims 10 to 12, **characterized in that** at least two actuating devices (34) are provided, comprising precisely one electric or pneumatic or hydraulic drive unit (42) for the operation of the actuating device (34), with the drive unit (42) being especially connected with a roof bow (46) or with the roof pillar (36).

## Revendications

1. Toit de véhicule à moteur comprenant
un toit de base (14) et
un segment de toit (16) mobile dans un sens sensiblement vertical par rapport au toit de base (14), qui repose sensiblement sur le toit de base (14) dans l'état fermé et qui est disposé à distance du toit de base (14) dans l'état ouvert,
dans lequel un espace de rangement (28) supplémentaire est formé pour recevoir des bagages dans l'état ouvert et
le segment de toit (16) présente au moins un élément de toit supérieur (18) relié de façon mobile relativement avec le segment de toit (16) et/ou le toit de base (14) présente au moins un élément de toit inférieur (22) relié de façon mobile relativement avec le toit de base (14) pour ouvrir et fermer l'espace de rangement (28),
**caractérisé en ce que** l'élément de toit supérieur (18) ou l'élément de toit inférieur (22) est au moins partiellement transparent, l'élément de toit supérieur (18) étant au moins partiellement transparent et l'élément de toit inférieur (22) opaque ou l'élément de toit inférieur (22) étant au moins partiellement transparent et l'élément de toit supérieur (18) opaque.

2. Toit de véhicule à moteur selon la revendication 1, **caractérisé en ce que** l'élément de toit (18, 22) peut pivoter autour d'au moins un axe de pivotement (20), l'axe de pivotement (20) étant en particulier disposé sur le côté et/ou à l'intérieur de l'élément de toit (18, 22).

3. Toit de véhicule à moteur selon la revendication 1 ou 2, **caractérisé en ce que** l'élément de toit (18, 22) comporte des lamelles (24) qui peuvent être repliées en coulissant les unes en dessous des autres et/ou par-dessus les autres et/ou dans les autres.

4. Toit de véhicule à moteur selon la revendication 3 **caractérisé en ce qu'**un déflecteur (26) est relié au toit de base (14) et les lamelles (24) sont disposées sous le déflecteur (26) quand elles sont repliées.

5. Toit de véhicule à moteur selon l'une des revendications 1 à 4, **caractérisé en ce qu'**au moins un dispositif d'actionnement (34) est prévu pour déplacer le segment de toit (16), le dispositif d'actionnement (34) pouvant en particulier être relié à un longeron de toit de gauche (36) et/ou à un longeron de toit de droite (36) ou pouvant être relié à au moins un arceau de toit (46), l'arceau de toit (46) étant en particulier relié au moins indirectement aux longerons de toit (36).

6. Toit de véhicule à moteur selon l'une des revendications 1 à 5, **caractérisé en ce qu'**un déflecteur (26) est relié de manière mobile au segment de toit (16).

7. Toit de véhicule à moteur selon l'une des revendications 1 à 6, **caractérisé en ce qu'**une enveloppe de protection (50) flexible est reliée au segment de toit (16) et au toit de base (14) pour protéger l'espace de rangement des effets de l'environnement.

8. Toit de véhicule à moteur selon l'une des revendications 1 à 7, **caractérisé en ce que** le segment de toit (16) ouvert au maximum présente par rapport au toit de base (14) une distance dans le sens vertical de ≥ 10,0 cm, en particulier ≥ 30,0 cm, de préférence ≥ 50,0 cm et tout particulièrement ≥ 80,0 cm.

9. Toit de véhicule à moteur selon l'une des revendications 1 à 8, **caractérisé en ce que** le segment de toit (16) ouvert au maximum présente par rapport à son état fermé un décalage dans le sens horizontal de ≤ 10,0 cm, en particulier ≤ 5,0 cm, de préférence ≤ 2,0 cm, tout particulièrement ≤ 1,0 cm et plus encore ≤ 0,5 cm.

10. Carrosserie de véhicule à moteur, en particulier pour vans, breaks (10) ou minibus, avec un toit de véhicule à moteur (12) selon l'une des revendications 1 à 13, dans lequel sont prévues en particulier une galerie de toit de droite et une galerie de toit de gauche et le segment de toit (16) ouvert au maximum présente par rapport au toit de base (14) une distance supérieure à 1,5 fois, en particulier 2,0 fois, de préférence 3,5 fois et tout particulièrement 5,0 fois la distance entre la surface de la galerie de toit et la surface du toit de base (14).

11. Carrosserie de véhicule à moteur selon la revendication 10, **caractérisée en ce qu'**un longeron de toit de gauche (36) et un longeron de toit de droite (36) sont prévus et le toit de base (14) est relié aux longerons de toit (36) et se termine en particulier latéralement au niveau des longerons de toit.

12. Carrosserie de véhicule à moteur selon la revendication 10 ou 11, **caractérisée en ce que** le segment de toit (16) s'étend du longeron de toit de gauche (36) au longeron de toit de droite (36).

13. Carrosserie de véhicule à moteur selon l'une des revendications 10 à 12, **caractérisée en ce qu'**au moins deux dispositif d'actionnement (34) sont prévus, reliés avec exactement une unité d'entraînement électrique ou pneumatique ou hydraulique (42) pour faire fonctionner le dispositif d'actionnement (34), l'unité d'entraînement (42) étant en particulier reliée à un arceau de toit (46) ou au longeron de toit (36).
